# EUROPEAN PATENT APPLICATION

(11) **EP 4 703 188 A1**
(43) Date of publication of application: **04.03.2026**
(21) Application number: 24795706.1
(22) Date of filing: 20.03.2024
(51) Int. Cl.: B60L 58/10, B60L 1/00

(54) **BATTERY APPARATUS FOR VEHICLE, AND POWER SUPPLY SYSTEM AND VEHICLE**

(30) Priority: 28.04.2023 CN 202310488011; 31.05.2023 CN 202310647034
(71) Applicant: BYD Company Limited, Shenzhen, Guangdong 518118 (CN)
(72) Inventor: LYU, Xin, Shenzhen, Guangdong 518118 (CN); HUANG, Jian, Shenzhen, Guangdong 518118 (CN); ZHANG, Wenling, Shenzhen, Guangdong 518118 (CN); GAO, Liangliang, Shenzhen, Guangdong 518118 (CN); ZHANG, Rong, Shenzhen, Guangdong 518118 (CN); HUANG, Bing, Shenzhen, Guangdong 518118 (CN)
(74) Representative: Mathys & Squire
(86) International application number: PCT/CN2024/082552
(87) International publication number: WO 2024/222323

(57) **Abstract**

A battery apparatus, which is applied to a power supply system and a vehicle. The battery apparatus comprises a power battery and a first voltage conversion module, wherein a first end of the first voltage conversion module is connected to the power battery, and a second end of the first voltage conversion module is directly connected to a first load; and the first voltage conversion module is configured to: in a power-off state of a vehicle, process a voltage which is output by the power battery, so as to supply power to the first load. Further disclosed are a power supply system and a vehicle.

## Description

### CROSS-REFERENCE TO RELATED APPLICATIONS

The present disclosure claims priority to Chinese Patent Application No. 202310488011.8 and titled "battery apparatus for a vehicle, power supply system, and vehicle " filed on April 28, 2023, and Chinese Patent Application No.202310647034.9 and titled "voltage conversion device for a vehicle, power supply system, and vehicle" filed on May 31, 2023, which is incorporated herein by reference in its entirety.

### FIELD

The present disclosure generally relates to the field of power supply technology, and in particular, to a battery apparatus for a vehicle, a power supply system, and a vehicle.

### BACKGROUND

With the rapid development of the new energy vehicle industry, new energy vehicles have been used in more and more families due to their advantages such as low carbon environmental protection, low noise, and high driving efficiency. The power batteries as a core component of new energy vehicles, provide power for the vehicles, in particular, lithium iron phosphate batteries have made great progress and improvements in terms of safety in use, cell energy density, high and low temperature characteristics, service life, and environmental friendliness.

At present, in the relevant art, the power battery and the starting battery of vehicles are two independent batteries, the power supply system requires two battery packs, which not only incurs high cost but also has complex power supply methods.

### SUMMARY

In view of the above-mentioned defects or deficiencies in the prior art, it is desirable to provide a battery apparatus for a vehicle, a power supply system, and a vehicle.

In a first aspect, the present disclosure provides a battery apparatus for a vehicle, including: a power battery; and a first voltage conversion module, a first end of the first voltage conversion module being connected to the power battery, and a second end of the first voltage conversion module being directly connected to a first load, the first voltage conversion module being configured to: in a power-off state of a vehicle, process a voltage which is output by the power battery, so as to supply power to the first load.

In one of the embodiments, the battery apparatus includes a first housing, and the power battery and the first voltage conversion module are integrated in the first housing.

In one of the embodiments, the first voltage conversion module includes: a transformer, a primary winding of the transformer connected to the power battery, a secondary winding of the transformer connected to the first load; a switching element, the switching element being connected to the primary winding; and a conversion control module, the conversion control module being connected to the switching element and used to control the switching element to turn on or off.

In one of the embodiments, the battery apparatus further includes: a battery management unit, the battery management unit being connected to the power battery, and also connected to the first end of the first voltage conversion module, and the battery management unit is used to control the first voltage conversion module to switch between a first state and a second state; wherein, in the first state, the first voltage conversion module can step down the voltage of the power battery; and in the second state, the first voltage conversion module stops working.

In one of the embodiments, the battery apparatus further includes: a control switch group, a first end of the control switch group being connected to the power battery, a second end of the control switch group being connected to a first end of a second voltage conversion module, and a second end of the second voltage conversion module being connected to the first load, the second voltage conversion module being configured to: in a starting state of the vehicle, process the voltage which is output by the power battery, so as to supply power to the first load.

In one of the embodiments, the control switch group includes a first control switch and a second control switch, the first control switch being connected between a positive electrode of the power battery and the first end of the second voltage conversion module, and the second control switch being connected between a negative electrode of the power battery and the first end of the second voltage conversion module.

In one of the embodiments, the battery apparatus further includes: the battery management unit, the battery management unit being connected to the control switch group and the battery management unit being also used to control the control switch group to switch between an ON state and an OFF state.

In one of the embodiments, the battery apparatus further includes: a pre-charging circuit unit, one end of the pre-charging circuit unit being connected to the positive electrode of the power battery and the other end of the pre-charging circuit unit being connected to the battery management unit; and a protection unit, the protection unit being connected between the positive electrode of the power battery and the first end of the first voltage conversion module.

In one of the embodiments, the power battery includes a plurality of cells connected in series in sequence, the first end of the first voltage conversion module being connected to a first pole of the cell at the head end and a second pole of the cell at the tail end.

In a second aspect, the present disclosure provides a power supply system, including: one or more first loads; the battery apparatus as described in the first aspect above, and the battery apparatus is connected to the first load.

In a third aspect, the present disclosure provides a power supply control method, the method includes: a control instruction is received; the first voltage conversion module is turned on according to the control instruction, so as to step down the voltage of the power battery to supply power to the first load.

In a fourth aspect, the present disclosure provides a vehicle, the vehicle includes a memory, a processor, and a computer program stored in the memory and executable on the processor, when the processor executes the program, the power supply control method as described in the third aspect is implemented.

In the battery apparatus for a vehicle, the power supply system, and vehicle provided by the embodiments of the present disclosure, the battery apparatus includes the power battery and the first voltage conversion module, the first end of the first voltage conversion module being connected to the power battery, and the second end of the first voltage conversion module being directly connect to the first load; the first voltage conversion module is configured to: in a power-off state of a vehicle, process a voltage which is output by the power battery, so as to supply power to the first load. Compared with the related art, since the first voltage conversion module is provided in the battery apparatus, the power battery can be additionally used as a starting battery when the vehicle is in the power-off state, so as to process the voltage which is output by the power battery, thereby supplying power to the first load, the power supply method is simple, enabling the power battery to serve as both an energy supply unit for an entire high voltage power section and the starting battery to supply power to the first load, achieving complete multi-scenario use of the power battery and greatly reducing costs, at the same time, electrical isolation between high voltage and low voltage is achieved during the energy conversion process, ensuring the power consumption safety of the entire first load.

### BRIEF DESCRIPTION OF THE DRAWINGS

Other features, purposes, and advantages of the present disclosure will become more apparent by reading the detailed description of the non-limiting embodiments with reference to the following drawings:
FIG. 1 is a schematic structural diagram of a battery apparatus for a vehicle provided by an embodiment of the present disclosure;
FIG. 2 is a schematic structural diagram of the interior of a power battery provided by an embodiment of the present disclosure;
FIG. 3 is a schematic structural diagram of a first voltage conversion module provided by an embodiment of the present disclosure;
FIG. 4 is a schematic structural diagram of a power supply system provided by an embodiment of the present disclosure;
FIG. 5 is a schematic structural diagram of a power supply system provided by an embodiment of the present disclosure;
FIG. 6 is a schematic structural diagram of a power supply system provided by an embodiment of the present disclosure;
FIG. 7 is a schematic structural diagram of a thermal management of a power supply system provided by an embodiment of the present disclosure;
FIG. 8 is a schematic structural diagram of a power supply system provided by an embodiment of the present disclosure;
FIG.9 is a schematic flowchart of a power supply control method provided by an embodiment of the present disclosure;
FIG. 10 is a schematic flowchart of a power supply control method provided by an embodiment of the present disclosure;
FIG.11 is a schematic structural diagram of a power supply control device provided by an embodiment of the present disclosure;
FIG.12 is a schematic structural diagram of a vehicle provided by an embodiment of the present disclosure.

Explanation of reference signs:
power battery - 10; first voltage conversion module - 20; battery apparatus - 11; first load - 30; battery management unit - 40; low voltage power distribution unit - 60; second voltage conversion module - 70; high voltage power distribution unit - 80; controller - 90; heat dissipation pipeline - 131; refrigeration system - 132; pre-charging resistor - 142; pre-charging relay - 143; diverter - 160; cold plate - 180; transformer - 210; switching element - 220; conversion control module - 230; first control switch - 510, second control switch - 520; pre - charging circuit unit - 430; protection unit - 440.

### DETAILED DESCRIPTION

Hereinafter, exemplary embodiments of the present disclosure will be described in more detail with reference to the drawings. Although the exemplary embodiments of the present disclosure are shown in the drawings, it will be understood that the present disclosure can be implemented in various forms and should not be limited by the embodiments described herein. On the contrary, these embodiments are provided to ensure the present disclosure can be more thoroughly understood and a scope of the present disclosure can be fully conveyed to those skilled in the art.

The present disclosure will be further described in detail below with reference to the drawings and the embodiments. It will be understood that the specific embodiments described herein are only used to explain the relevant disclosure, rather than limit the disclosure. In addition, it should be noted that, for the convenience of description, only the parts related to the disclosure are shown in the drawings.

It should be noted that, in the case of no conflict, the embodiments in the present disclosure and the features in the embodiments can be combined with each other. The present disclosure will be described in detail below with reference to the drawings and in combination with the embodiments.

It will be understood that with the improvement of environmental awareness and the continuous development of the vehicle market, new energy vehicles have gradually become the mainstream in the market. As an important part of new energy vehicles, battery technology has also received more and more attention and applications. Batteries are mainly used as power source of electric vehicles in the new energy vehicles to provide electric energy for the electric vehicles. Especially, as the power output of a high voltage module of an entire vehicle, a power battery is used as a power source to provide power source for the vehicles. A starting battery is the battery used for starting an automotive motor and is responsible for the power supply of a low voltage power supply system, the starting battery mostly uses a valve-regulated lead-acid battery, an open-type tubular lead-acid battery, and a lithium iron phosphate battery.

At present, a low voltage power supply system of a vehicle in the related technology includes a starting battery, an original starting battery management system (LBMS), a low voltage power distribution box, a vehicle mounted low voltage power supply system DC/DC conversion module (DC/DC), a charging MOS tube, a discharging MOS tube, and a relay, etc., wherein, the LBMS contains a sampling unit and a control driving unit. In a discharging process, the control driving unit in the LBMS controls a relay to close contacts thereof and controls the discharging MOS tube and the charging MOS tube to conduct, forming a discharging circuit, thus the power of the starting battery is distributed to various loads through the vehicle mounted DC/DC and the low voltage distribution box.

Especially, the sampling unit in the LBMS can collect the power of the starting battery, when the LBMS determines that the power of the starting battery is lower than a preset threshold, the LBMS will send a charging request to a VCU, the VCU controls the power battery in a high voltage power supply system to charge the starting battery intelligently, the specific process is that the VCU sends a charging instruction to the LBMS, so that the LBMS controls the relay to close the contacts thereof through the control driving unit and the LBMS controls the discharging MOS tube and the charging MOS tube to conduct, forming the charging circuit, and the power battery charges the starting battery intelligently through the vehicle mounted DC/DC to ensure the power supply demand of the entire vehicle. However, the power battery and the starting battery of the vehicle are battery packs in two independent power supply systems, which not only incurs high cost but also needs to rely on the power battery in the high voltage power supply system for charging, the power supply method is complex and potential safety hazards exist.

Based on the above defects, the present disclosure provides a battery apparatus for a vehicle, a power supply system, and a vehicle. Compared with the related technology, since the first voltage conversion module is provided in the battery apparatus, the power battery can be additionally used as a starting battery when the vehicle is in a power-off state, so as to process a voltage which is output by the power battery, thereby supplying power to a first load, the power supply method is simple, enabling the power battery to serve as both an energy supply unit for an entire high voltage power section and the starting battery to supply power to the first load, achieving complete multi-scenario use of the power battery and greatly reducing costs, at the same time, electrical isolation between high voltage and low voltage is achieved during the energy conversion process, ensuring the power consumption safety of the entire first load.

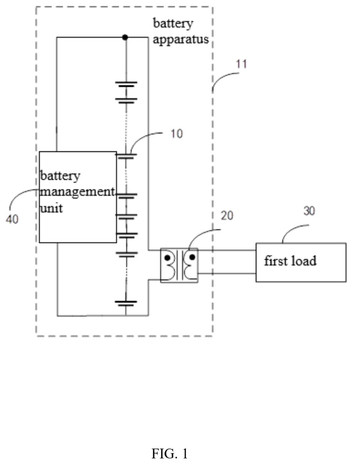

For ease of understanding and illustration, the battery apparatus for the vehicle, the power supply system, and the vehicle provided by the embodiments of the present disclosure are described in detail below with reference to FIG. 1 to 12.

FIG. 1 is a schematic structural diagram of a battery apparatus for a vehicle provided by an embodiment of the present disclosure. As shown in FIG.1, the system structure includes: a power battery 10 and a first voltage conversion module 20, a first end of the first voltage conversion module 20 is connected to the power battery 10, and a second end of the first voltage conversion module 20 is directly connected to a first load 30.

The first voltage conversion module 20 is configured to: in a power-off state of a vehicle, process a voltage which is output by the power battery 10, so as to supply power to the first load 30.

Specifically, the above power battery can be used as a power source to provide power source for tools, the tools can be electric vehicles, electric trains, electric bicycles, etc. The power battery can also be additionally used as a starting battery, the starting battery is used to supply power to a motor when starting the motor, assist a generator to supply power to the first load when the generator is overloaded, and supply power to the first load when the generator does not generate electricity or the voltage is low. The power battery is used for small-current discharge and allows long-term discharge, when the power battery is additionally used as the starting battery, the power battery has strong instantaneous high current discharge capability and long endurance.

The interior of the above power battery may include electrolyte, separator, positive/negative electrode materials, etc., which are combined together to form a cell, and a plurality of individual cells are packaged and grouped in a specific way to finally form the power battery.

Especially, a second end of the first voltage conversion module is directly connected to a first load refers to the absence of a battery between the first voltage conversion module and the first load. The first load can be a low voltage load, for example, the first load can include a low voltage load of the vehicle, such as an ignition device, an instrument device, a navigation, etc., usually a 12V low voltage load. The above power-off state of the vehicle can refer to a gear of the vehicle being in an OFF state.

The above first voltage conversion module is used to additionally use the power battery as the starting battery when the vehicle is in the power-off state, the first voltage conversion module converts the voltage which is output by the power battery into a low voltage, so as to supply power to the first load, a designed power of the first voltage conversion module can be 300W, and the first voltage conversion module uses a half-bridge circuit topology type.

The voltage which is output by the power battery is generally a high voltage, when the vehicle is in the power-off state, the first voltage conversion module is used to convert the high voltage which is output by the power battery into the low voltage required by the first load, at the same time, in an entire voltage conversion process, a primary side where the power battery is located and a secondary side where the low voltage of the first load is located achieve a function of electrical isolation through the first voltage conversion module, in this way, when an abnormality occurs on the primary side or the secondary side of a transformer in the first voltage conversion module, it will not affect the normal power consumption of the other side, realizing the power consumption safety of the first load.

The battery apparatus for a vehicle provided by the embodiments of the present disclosure includes the power battery and the first voltage conversion module, the first end of the first voltage conversion module being connected to the power battery, and the second end of the first voltage conversion module being directly connect to the first load, the first voltage conversion module being configured to: in the power-off state of a vehicle, process the voltage which is output by the power battery, so as to supply power to the first load. Compared with the related art, since the first voltage conversion module is provided in the battery apparatus, the power battery can be additionally used as a starting battery when the vehicle is in the power-off state, so as to process the voltage which is output by the power battery, thereby supplying power to the first load, the power supply method is simple, enabling the power battery to serve as both the energy supply unit for the entire high voltage power section and the starting battery to supply power to the first load, achieving complete multi-scenario use of the power battery and greatly reducing costs; at the same time, electrical isolation between high voltage and low voltage is achieved during the energy conversion process, ensuring the power consumption safety of the entire first load.

In one of the embodiments, the above battery apparatus includes a first housing, and the power battery and the first voltage conversion module are integrated in the first housing.

The above first housing can be made of aluminum alloy or cast steel.

In an embodiment, in the above battery apparatus, a thermal management multi-scenario use method can be adopted to centrally process thermal management modules of the power battery and the first voltage conversion module, heat dissipation is achieved through a heat dissipation device and a refrigeration system, the heat dissipation device and the refrigeration system can include a cold plate and a refrigerant.

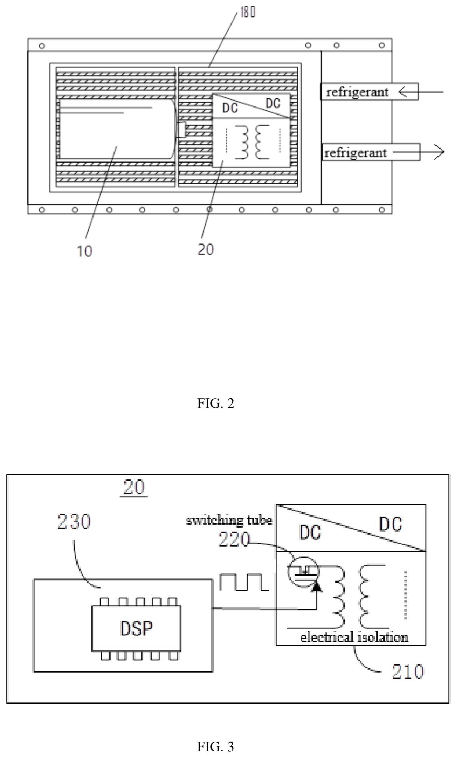

As shown in FIG.2, FIG.2 is a schematic diagram of the principle of thermal management multi-scenario use of the power battery and the first voltage conversion module, including the power battery 10, the first voltage conversion module 20, and the cold plate 180, the power battery 10 and the first voltage conversion module 20 are respectively integrated on the cold plate 180, a plurality of pipes are arranged on the cold plate 180, and a refrigerant inlet and a refrigerant outlet are respectively connected to the pipes, when the power battery 10 and the first voltage conversion module 20 start to work, heat is generated, the refrigerant can be injected from outside, the refrigerant flows into each channel of the cold plate, taking away part of the heat generated by the power battery 10 and the first voltage conversion module 20, and the refrigerant is discharged through the refrigerant outlet, thus realizing the heat dissipation operation.

In the embodiment, by centrally processing the thermal management modules of the power battery and the first voltage conversion module in the first housing, an original heat dissipation device and a refrigeration system can continue to be used for heat dissipation, greatly reducing the cost.

In one of the embodiments, as shown in FIG.3, the first voltage conversion module 20 includes: a transformer 210, a primary winding of the transformer 210 is connected to the power battery 10, and a secondary winding of the transformer 210 is connected to the first load.

A switching element 220, the switching element 220 is connected to the primary winding.

A conversion control module 230, the conversion control module 230 is connected to the switching element 220 and is used for controlling the switching element 220 to turn on or off.

It should be noted that the above transformer is used for converting the voltage which is output by the power battery, so as to supply power to the first load. The first voltage conversion module can receive and respond to a control instruction of a battery management unit to control the switching element to turn on or off. When the switching element is turned on, the transformer converts the voltage which is output by the power battery, at this time, the first voltage conversion module is in a working state, when the switching element is turned off, the transformer stops working, at this time, the first voltage conversion module is in a sleep state, the above switching element can be a switching tube.

In the embodiment, since the transformer, the switching element, and the energy conversion control module are provided in an energy conversion unit, the operation and shutdown of the transformer can be easily realized by controlling the switching element to turn on or off through the energy conversion control module.

In one of the embodiments, please continue to refer to FIG. 1, the above battery apparatus further includes: a battery management unit 40, the battery management unit 40 being connected to the power battery 10 and the first end of the first voltage conversion module 20, the battery management unit 40 being used to control the first voltage conversion module 20 to switch between a first state and a second state.

Especially, in the first state, the first voltage conversion module 20 can step down the voltage of the power battery 10; in the second state, the first voltage conversion module 20 stops working.

It should be noted that the above first voltage conversion module can include two states. One of the states is the working state, that is, the main power part of the first voltage conversion module starts to work, and converts the voltage which is output by the power battery, so as to supply power to the first load; the other of the states is the sleep state, that is, the main power part of the first voltage conversion module stops working. The above battery management unit is used to control the energy conversion unit to switch between the first state and the second state.

The above battery management unit is also used to monitor a State of Charge (SOC) of the power battery, that is, a remaining battery capacity, to ensure that the SOC is maintained within a reasonable range and prevent damage to the power battery due to over -charging or over-discharging. The battery management unit is also used to monitor a terminal voltage and temperature of each cell in the power battery, a charging and discharging current, and a total voltage of a battery pack in the charging and discharging process of the power battery, so as to prevent over-charging or over-discharging of the battery; at the same time, the battery management unit can timely provide battery status, and select problematic batteries, and maintain the reliability and efficiency of the entire power battery operation, making the realization of the remaining battery capacity estimation model possible. The battery management unit is also used for the equalization between single batteries, that is, to charge the single batteries equally, to ensure each cell in the power battery reaches a balanced and consistent state.

In an embodiment, the interior of the battery management unit may also include a processing unit, a sampling unit and a driving control unit respectively connected to the processing unit, the sampling unit being used to collect the terminal voltage and temperature of each cell in the power battery, the charging and discharging current, and the total voltage of the battery pack; and the driving control unit being used to drive the ON/OFF of a relay in a control circuit and the ON/OFF an MOS tube in response to the control instruction of the processing unit. The processing unit is used to generate the control instruction and send the control instruction to the driving control unit, and to determine whether the state of charge of the power battery is maintained within the reasonable range, the reasonable range refers to the state of charge corresponding to the normal charging and discharging of the power battery.

Especially, the power battery, the battery management unit, and the first voltage conversion module can be packaged and connected using a packaging process to form the battery apparatus. The packaging process can include assembly, air tightness monitoring, software flashing, and electrical performance monitoring processes.

In one of the embodiments, the above battery apparatus further includes: a control switch group, a first end of the control switch group being connected to the power battery 10, and a second end of the control switch group being connected to a first end of a second voltage conversion module 70.

A second end of the second voltage conversion module 70 is connected to the first load 30, the second voltage conversion module 70 is configured to: in a starting state of the vehicle, process the voltage which is output by the power battery, so as to supply power to the first load 30.

It should be noted that a starting state of the vehicle may refer to a gear state of the vehicle being ON, the above second voltage conversion module being a vehicle mounted DC, which can be connected to charging and discharging interfaces of the vehicle, motor, and motor controller. When the vehicle is in the starting state, the first voltage conversion module and the second voltage conversion module can perform voltage conversion simultaneously, so as to supply power to the first load.

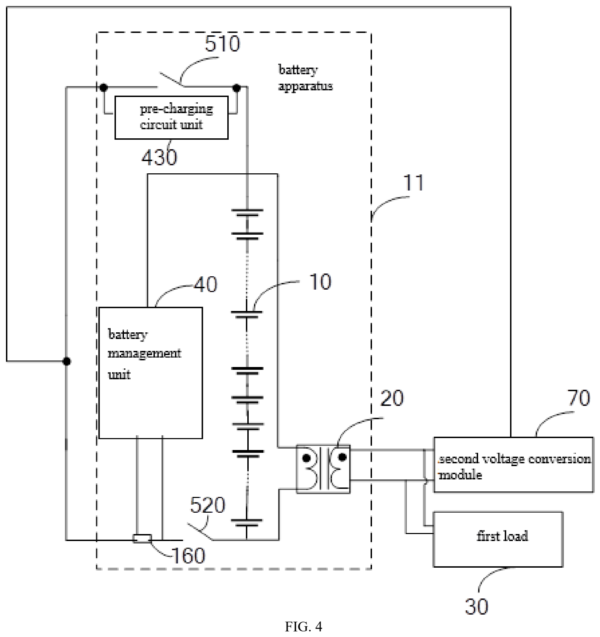

Especially, as shown in FIG. 4, the above control switch group includes a first control switch 510 and a second control switch 520, the first control switch 510 being connected between a positive electrode of the power battery 10 and the first end of the second voltage conversion module 70, and the second control switch 520 being connected between a negative electrode of the power battery 10 and the first end of the second voltage conversion module 70.

The above battery management unit 40 is connected to the control switch group, the battery management unit 40 is also used to control the control switch group to switch between an ON state and an OFF state.

Specifically, when the vehicle is in the power-off state, the battery management unit controls the first control switch and the second control switch to turn on, to ensure the above control switch group is in the OFF state, at this time, the power battery is connected to the first voltage conversion module, the power battery converts the voltage which is output by the power battery through the first voltage conversion module, thereby independently supplying power to the first load.

When the vehicle is in the starting state, the battery management unit controls the first control switch and the second control switch to turn off, to ensure the above control switch group is in the ON state, at this time, the power battery not only converts the voltage which is output by the power battery through the first voltage conversion module, but also converts the voltage which is output by the power battery through the second voltage conversion module, so as to supply power to the first load.

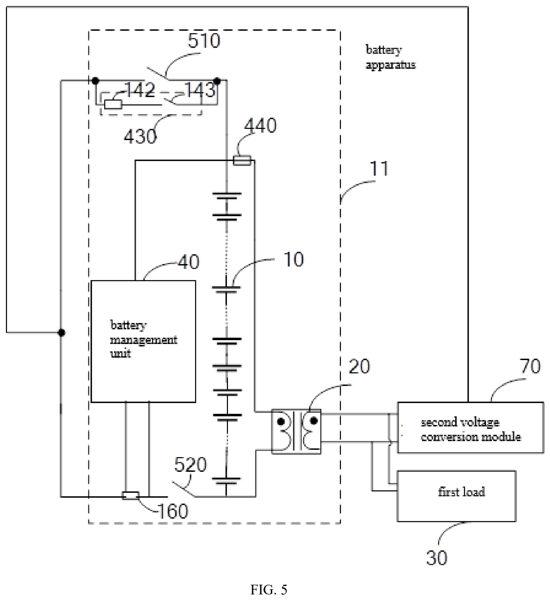

In one of the embodiments, as shown in FIG. 5, the above battery apparatus further includes a pre-charging circuit unit 430 and a protection unit 440, one end of the pre-charging circuit unit 430 being connected to the positive electrode of the power battery 10, and the other end of the pre-charging circuit unit 430 being connected to one end of the battery management unit 40, the protection unit 440 is connected between the positive electrode of the power battery 10 and the first end of the first voltage conversion module 20.

It should be noted that in a driving system of the vehicle, the above battery apparatus is connected to an entire vehicle controller, and a capacitor with a relatively large capacity is arranged in the controller (generally 500uF to 2000uF). If the capacitor is in a zero state before power on, that is, the capacitor has no energy, then at the moment when a circuit is closed, the circuit is equivalent to a direct short circuit, and the current is very large, if such a large current is not limited, it will cause a huge impact and damage on the power battery. Therefore, the pre-charging circuit unit needs to be added to the battery apparatus to reduce the inrush current when powering on and protect the power battery and the relay.

The above protection unit can be used to protect the power battery, generally, the protection unit is composed of a tube body, a fuse element, and an end cover, the fuse element is the most important part, which is made of a sheet shaped pure silver strip, and some of the fuse elements use copper silver composite strips, the fuse element is welded on a contact blade, the fuse element and quartz sand are located inside the tube body. The tube body and two end cover plates form a closed space for arc extinguishing, and different tube bodies correspond to different voltage levels. By connecting the protection unit in series between the power battery and the first voltage conversion module, a loop circuit can be protected, when over-current occurs, a part of a metal element with a smaller cross-sectional area will reach a melting point and has a characteristic of being fusible, the loop circuit can be cut off (protected) by fusing.

In an embodiment, the above pre-charging circuit unit 430 includes a pre-charging resistor 142 and a pre-charging relay 143, one end of the pre-charging resistor 142 being connected to one end of the battery management unit 40, the other end of the pre-charging resistor 142 being connected to one end of the pre-charging relay 143, and the other end of the pre-charging relay 143 being connected to the positive electrode of the power battery 10.

It should be noted that the function of the pre-charging relay is to effectively protect the capacitor and ensure safety, preventing the charging current from being too large at the moment of direct power on, an excessive instantaneous current may cause damage to the capacitor and may also damage devices such as a main negative relay. The above pre-charging resistor plays a role in current limiting. Generally, the pre-charging resistor can be a solid ceramic resistor, an aluminum shell resistor, a cement resistor, etc.

In an embodiment, the above battery management unit can be connected to the second control switch through a diverter 160, the above diverter is an instrument for measuring direct current, the diverter is made based on the principle that a voltage is generated across a resistor when a direct current passes through the diverter. In an embodiment, the diverter can be a MICROHM high precision the diverter. The diverter can measure the current to check all branches connected to high voltage buses in the vehicle, including the electrical connection integrity of the system circuits such as the entire battery system, wires, connectors, second voltage conversion module, motor controller, high voltage box, and protection cover, etc.

In one of the embodiments, the power battery includes a plurality of cells connected in series in sequence, the first end of the first voltage conversion module being connected to a first pole of the cell at the head end and a second pole of the cell at the tail end.

It should be noted that the first pole of the cell at the head end in the above power battery is connected to the first end of the first voltage conversion module, a second pole of the cell at the head end is connected to a first pole of a next cell, and so on, until a second pole of a cell before the cell at the tail end is connected to a first pole of the cell at the tail end, and the second pole of the cell at the tail end is connected to the first end of the first voltage conversion module.

In the embodiment, by connecting the first end of the first voltage conversion module to the cell at the head end and the cell at the tail end in the battery apparatus, full multi-scenario use of all cells in the power battery is achieved, to ensure each cell in the power battery can function, then, the voltage which is output by the power battery is converted through the first voltage conversion module, so as to supply power to the first load.

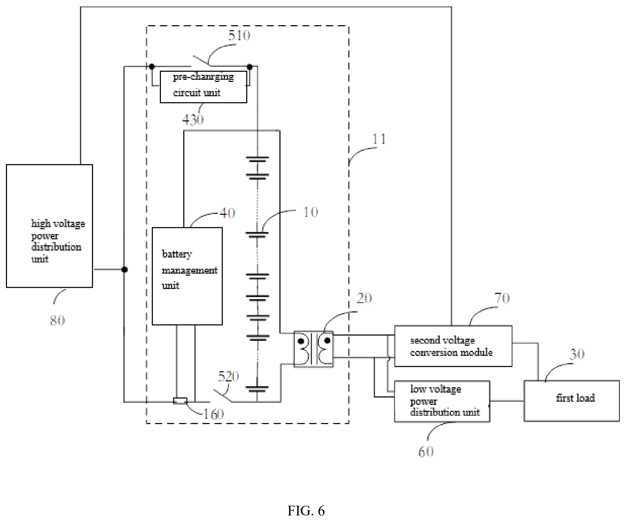

In another aspect, as shown in FIG.6, an embodiment of the present disclosure provides a power supply system, the power supply system includes: one or more first loads 30 and the battery apparatus 11, the battery apparatus 11 is connected to the first load 30.

Especially, the first load is a low voltage load, for example, the first load can include an ignition device, an instrument device of the vehicle, etc. In the embodiment, by connecting the battery apparatus to the first load, the voltage which is output by the power battery can be converted through the first voltage conversion module in the battery apparatus, so as to supply power to the first load.

In one of the embodiments, the above power supply system further includes a low voltage power distribution unit 60, a first end of the low voltage power distribution unit 60 is connected to the second end of the first voltage conversion module 20, and a second end of the low voltage power distribution unit 60 is connected to the first load 30.

The above low voltage power distribution unit is used for power distribution and management of a low voltage power supply system of the vehicle, when the power battery is additionally used as the starting battery, the power battery serves as a power source in the low voltage power supply system, distributing the voltage converted by the first voltage conversion module or the second voltage conversion module to each different first load.

Especially, when the power battery is additionally used as the starting battery, in the power-off state of the vehicle, the voltage which is output by the power battery is processed by the first voltage conversion module, and then the converted voltage is distributed to each different first load through the low voltage power distribution unit.

In the starting state of the vehicle, the first voltage conversion module and the second voltage conversion module can simultaneously process the voltage which is output by the power battery, and then the converted voltage is distributed to each different first load through the low voltage power distribution unit.

In one of the embodiments, the above power supply system further includes: the second voltage conversion module 70, the first end of the second voltage conversion module 70 being connected to the power battery 10, and the second end of the second voltage conversion module 70 being connected to the first load 30.

The second voltage conversion module 70 is configured to: in the starting state of the vehicle, process the voltage which is output by the power battery 10 alone or simultaneously with the first voltage conversion module 20, so as to supply power to the first load 30.

It should be noted that the above second voltage conversion module is the vehicle mounted DC, the second voltage conversion module is a device used to convert the voltage which is output by the power battery to other voltage levels, for example, the second voltage conversion module can be used to convert a high voltage which is output by the power battery to a low voltage. Especially, a designed power of the second voltage conversion module is higher than that of the first voltage conversion module, for example, the designed power can be 2200w, using a full-bridge LLC circuit topology structure, the LLC circuit topology structure is a resonant circuit composed of two inductors and one capacitor. The topology structure can be divided into half-bridge topology type and full-bridge topology type according to the arrangement of MOS tubes. Since a rated voltage of the first load in the low voltage power supply system of the entire vehicle is low voltage, the second voltage conversion module is needed to convert the high voltage to the low voltage, so as to maintain the power consumption balance of the entire vehicle.

Especially, when the power battery is additionally used as the starting battery, in the starting state of the vehicle, the voltage which is output by the power battery is simultaneously converted by the first voltage conversion module and the second voltage conversion module to supply power to the first load through the low voltage power distribution unit.

In one of the embodiments, the above power supply system includes a second housing, and the first voltage conversion module 20 and the second voltage conversion module 70 are integrated in the second housing.

Especially, the above second housing can be made of aluminum alloy or cast steel.

In one of the embodiments, the above power supply system further includes a heat dissipation module, the heat dissipation module is adapted to dissipate heat from the first voltage conversion module 20 and the second voltage conversion module 70.

Specifically, the heat dissipation module can be used for thermal management multi-scenario use of the first voltage conversion module 20 and the second voltage conversion module 70.

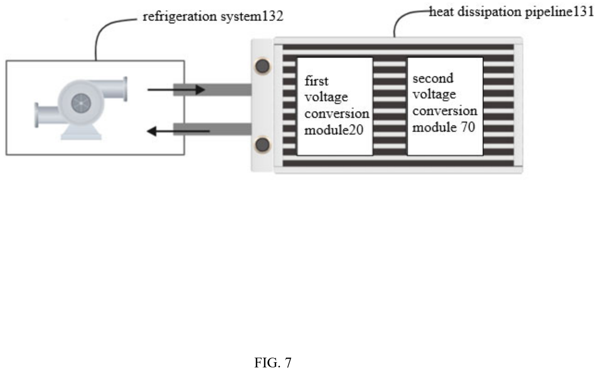

Referring to FIG.7, FIG.7 is a schematic diagram of a principle of thermal management multi-scenario use for the first voltage conversion module 20 and the second voltage conversion module 70, including a heat dissipation pipeline 131 and a refrigeration system 132, the first voltage conversion module 20 and the second voltage conversion module 70 are respectively integrated on the heat dissipation pipeline 131, liquid medium is set inside the above heat dissipation pipeline 131, the heat dissipation pipeline 131 is respectively connected with a liquid medium inlet and a liquid medium outlet, when the first voltage conversion module 20 and the second voltage conversion module 70 start to work, heat will be generated, the refrigeration system 132 can drive the liquid medium to be injected into the heat dissipation pipeline 131 and flow inside the heat dissipation pipeline 131, taking away part of the heat generated by the first voltage conversion module 20 and the second voltage conversion module 70, and the liquid medium is discharged through the liquid medium outlet, thus realizing the heat dissipation operation.

In one example, when the heat dissipation module only performs heat dissipation treatment for the first voltage conversion module 20, a flow rate of the liquid medium in the heat dissipation pipeline is a first speed, and a heat dissipation power of the heat dissipation module is a first heat dissipation power; when the heat dissipation module performs heat dissipation treatment for both the first voltage conversion module 20 and the second voltage conversion module 70, the flow rate of the liquid medium in the heat dissipation pipeline is a second flow rate, and the heat dissipation power of the heat dissipation module is a second heat dissipation power. Especially, the second flow rate is greater than the first flow rate, and the second heat dissipation power is greater than the first heat dissipation power. In this way, by increasing the heat dissipation power of the heat dissipation module, the heat dissipation module of a first power converter is additionally used to perform heat dissipation treatment for the second voltage conversion module 70, so as to further reduce the cost.

In the embodiment, by centrally processing the thermal management of the first voltage conversion module and the second voltage conversion module in the second housing, the original heat dissipation pipeline and refrigeration system can continue to be used for heat dissipation treatment, which greatly reduces the cost.

In one of the embodiments, the above power supply system further includes: a high voltage power distribution unit 80, a first end of the high voltage power distribution unit 80 is connected to the second voltage conversion module 70, and the second end of the second voltage conversion module 70 is connected to the first load 30.

The above high voltage power distribution unit is used for power distribution and management of a high voltage power supply system in the vehicle, providing functions such as vehicle discharge control, high voltage component power on control, circuit overload and short circuit protection, high voltage sampling, and low voltage control for the entire vehicle, protecting and monitoring the operation of the high voltage power supply system. Especially, the power batteries in the above power battery pack can serve as a power source in the high voltage power supply system, the high voltage power distribution unit distributes the high voltage provided by the power batteries to each different high voltage power consumption unit.

In an embodiment, the embodiment also provides a specific implementation method for high voltage charging and discharging through the power battery, the above system may also include one or more second loads, each second load is connected to the high voltage power distribution unit, and the second load can be a high voltage load. When the power battery is in the process of high voltage discharging, a controller generates a high voltage discharging instruction and sends the high voltage discharging instruction to the battery management unit, to ensure the battery management unit responds to the high voltage discharging instruction, firstly, the second control switch and the pre-charging relay are controlled to close, and the first control switch is controlled to open, to ensure a circuit enters a pre-charging stage, after pre-charging for a period of time, the battery management unit determines whether a pre-charging completion condition is met, when the pre-charging completion condition is not met, a pre-charging treatment can continue until the pre-charging completion condition is met; when the pre-charging completion condition is met, the battery management unit controls to close the first control switch and disconnect the pre-charging relay, thus forming a discharging circuit, and then power is distributed to each second load through the high voltage power distribution unit for power supply, realizing the high voltage discharging process.

When the power battery is in the process of high voltage charging, taking charging through an external charging device as an example, for example, the external charging device can be a charging gun, firstly, the high voltage power distribution unit can be connected to the charging gun, then the controller generates a high voltage charging instruction and sends the high voltage charging instruction to the battery management unit, to ensure the battery management unit responds to the high voltage charging instruction, firstly, whether the external charging gun is successfully connected to the high voltage power distribution unit is detected, when the connection is successful, the battery management unit controls the first control switch and the second control switch to close in sequence to form a charging circuit, and then the power battery is charged through the high voltage power distribution unit, realizing the high voltage charging process.

Especially, the external charging device and the battery management unit shake hands by sending identification messages to each other, after the handshake is completed, the charging device and the vehicle battery management unit send parameter configuration messages to each other, and configure their respective charging parameters according to the parameter configuration messages, after parameter configurating is completed, the charging device charges the power battery.

In an embodiment, in the process of additionally using the power battery as the starting battery, the embodiment also provides a specific implementation method for the low voltage charging and discharging of the power battery, the controller is connected to the battery management unit, and the low voltage power distribution unit is connected to each first load. When the power battery is in the process of low voltage discharging, the controller can detect the gear information of the vehicle, when the controller detects that the gear information of the vehicle is OFF, that is, it is determined that the vehicle is in the power-off state, a first low voltage discharging instruction is generated and sent to the battery management unit, to ensure the battery management unit responds to the first low voltage discharge instruction, the first voltage conversion module is controlled to be in the working state, the high voltage which is output by the power battery is converted into the low voltage through the first voltage conversion module, and then the converted voltage is distributed to different low voltage electrical units through the low voltage power distribution unit.

When the controller detects that the gear information of the vehicle is ON, that is, it is determined that the vehicle is in the starting state, a second low voltage discharge instruction is generated and sent to the battery management unit, to ensure the battery management unit responds to the second low voltage discharge instruction, the first voltage conversion module is controlled to be in the working state, the high voltage which is output by the power battery is converted into the low voltage through the first voltage conversion module, and at the same time, the second voltage conversion module is controlled to start working, the high voltage which is output by the power battery is converted into the low voltage through the second voltage conversion module, and then the voltage converted by the first voltage conversion module and the second voltage conversion module is distributed to different low voltage electrical units through the low voltage power distribution unit.

In the embodiment, the power battery can be additionally used as the starting battery through the first voltage conversion module, the high voltage which is output by the power battery is converted into the low voltage required by the first load, at the same time, in the entire energy conversion process, the primary side where the high voltage of the power battery is located and the secondary side where the low voltage load is located are electrically isolated through the first voltage conversion module, ensuring the electrical safety of the entire power supply system.

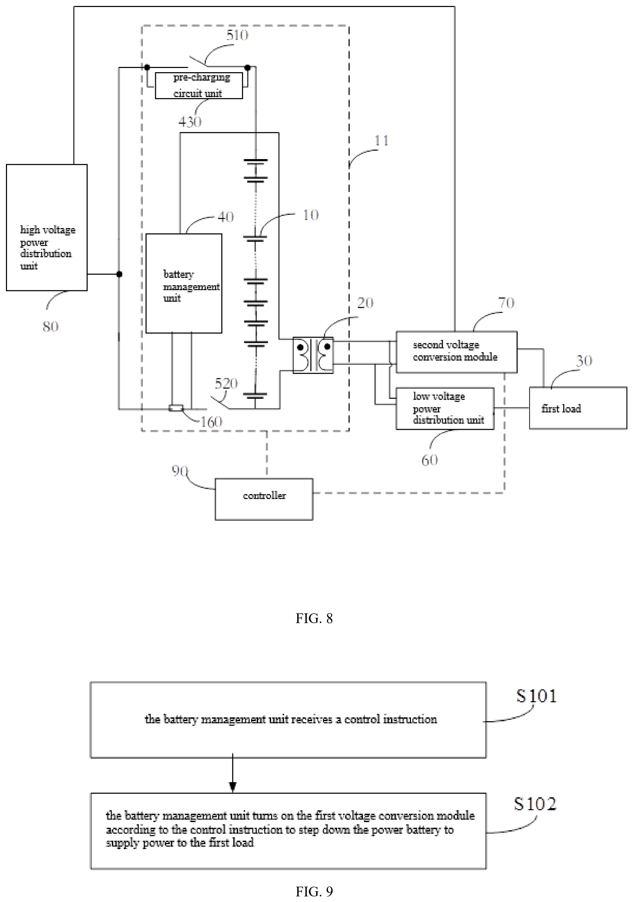

In one of the embodiments, as shown in FIG. 8, the above power supply system also includes the controller 90, the controller is electrically connected to the battery apparatus 11.

When it is detected that the vehicle is in the power-off state, the controller 90 is used to generate a first control instruction and send the first control instruction to the battery apparatus, to ensure the battery apparatus 11 steps down the voltage of the power battery through the first voltage conversion module 20, so as to supply power to the first load 30.

When it is detected that the vehicle is in the starting state, the controller 90 is also used to generate a second control instruction and send the second control instruction to the battery apparatus, to ensure the battery apparatus 11 steps down the voltage of the power battery through the first voltage conversion module 20 and/or the second voltage conversion module 70, so as to supply power to the first load 30.

The above controller can be a vehicle control unit (VCU), the controller is connected to the battery apparatus and is used to control the battery apparatus to supply power to the first load according to the state information of the vehicle. As a core control device of the entire vehicle, the controller is used to detect the gear information of the vehicle, when it is detected that the gear information of the vehicle is OFF, the vehicle is determined to be in the power-off state, the first control instruction is generated and sent to the battery apparatus, the battery management unit in the battery apparatus responds to the first control instruction and controls the first control switch and the second control switch to turn off, at this time, the first voltage conversion module is directly connected to the power battery and independently supplies power to the first load, that is, the voltage which is output by the power battery is converted through the first voltage conversion module, so as to the converted voltage is distributed to each different first load through the low voltage power distribution unit.

When the controller detects that the gear information of the vehicle is ON, it is determined that the vehicle is in the starting state, the second control instruction is generated and sent to the battery apparatus, the battery management unit in the battery apparatus responds to the second control instruction and controls the first control switch and the second control switch to be closed, thus, on the one hand, the power battery supplies power to the first load through the first voltage conversion module, and on the other hand, the power battery supplies power to the first load through the second voltage conversion module, then, the voltage converted by the first voltage conversion module and the second voltage conversion module is distributed to each different first load through the low voltage power distribution unit.

In an embodiment, the above controller is also used to collect accelerator pedal signals, brake pedal signals and other component signals, and after corresponding determinations are made, the actions of the component controllers at the lower level are controlled to drive the vehicle to run normally.

The above controller is also used as the command and management center of the vehicle, specifically including: vehicle driving torque control, braking energy feedback control, energy management of the entire vehicle, maintenance and management of the CAN network, diagnosis and processing of faults, vehicle status monitoring, etc., the controller plays a role in controlling the operation of the vehicle.

Especially, the vehicle driving torque control refers to reasonably controlling the working state and power output of the motor according to the driver's requirements, vehicle status and other working conditions to meet the requirements of driving conditions, including acceleration and deceleration, constant speed, braking and reversing conditions. Braking energy feedback control refers to judging the braking mode and calculating the distribution of driving torque, and recovering part of the energy according to the information of the brake pedal of the accelerator pedal, vehicle driving information and the state information of the power battery pack. The energy management of the entire vehicle refers to obtaining the best energy utilization rate and extending service life through the coordination and management of the vehicle driving system, battery management system, transmission system and other vehicle mounted energy consuming components. Diagnosis and processing of faults refer to conducting fault diagnosis and timely implementing corresponding safety protection processing, and storing and recalling fault codes. The maintenance and management of the CAN network refer to organizing information transmission, monitoring network status, managing network nodes, etc. Vehicle status monitoring refers to sending status information and fault diagnosis information of respective managed objects to the bus, and the controller displays them through the integrated digital instrument.

In other aspect, the embodiments of the present disclosure also provide a power supply control method, FIG. 9 shows a schematic flowchart of the power supply control method according to the embodiments of the present disclosure, the method can be executed by the battery management unit 40 in the battery apparatus. As shown in FIG. 9, the method includes:
S101. the battery management unit receives a control instruction.
S102. the battery management unit turns on the first voltage conversion module according to the control instruction to step down the voltage of the power battery to supply power to the first load.

The controller can detect the gear state of the vehicle, determine whether the vehicle is in the starting state or the power-off state according to the gear state of the vehicle, the corresponding control instruction is generated and sent to the battery management unit, to ensure the battery management unit receives the control instruction and turns on the first voltage conversion module according to the control instruction to step down the voltage of the power battery, so as to supply power to the first load.

Especially, the above gear state of the vehicle refers to the gear information corresponding to a starting state or a stopping state of the vehicle, which may include an ON state and an OFF state. The gear state of the vehicle can be detected by the controller, for example, the gear state of the vehicle can be detected by determining a starting switch of the vehicle through the controller, when the starting switch is in an ON state, it is determined that the gear state of the vehicle is ON, that is, the vehicle is in the starting state; when the starting switch is in an OFF state, it is determined that the gear state of the vehicle is OFF, that is, the vehicle is in the power-off state.

The above control instructions include the first control instruction and the second control instruction. The first control instruction indicates that the vehicle is in the power-off state. The second control instruction indicates that the vehicle is in the starting state.

When the battery management unit receives the first control instruction, the first voltage conversion module is controlled to step down the voltage of the power battery to supply power to the first load according to the first control instruction. When the battery management unit receives the second control instruction, the power battery is controlled to step down through the second voltage conversion module to supply power to the first load according to the second control instruction, and the first voltage conversion module is controlled to step down the power battery to supply power to the first load.

In one of the embodiments, the controller can detect the gear information of the vehicle, when the gear state of the vehicle is OFF, that is, the vehicle is in the power-off state, only the first voltage conversion module in the battery apparatus steps down the voltage of the power battery to supply power to the first load. Specifically, the controller can determine whether the vehicle enters a sleep mode, when the vehicle enters the sleep mode, the controller can generate a third control instruction and send the third control instruction to the battery management unit, the battery management unit receives the third control instruction, the third control instruction is used to indicate that the vehicle enters the sleep mode, and then the first voltage conversion module is controlled to stop working according to the third control instruction.

Further, the controller can detect whether the vehicle triggers a low power protection mode, when the low power protection mode is triggered, a fourth control instruction is generated and sent to the battery management unit, the battery management unit receives the fourth control instruction, the fourth control instruction indicates that the vehicle triggers the low power protection mode, and the first voltage conversion module is restarted to step down the voltage of the power battery, so as to supply power to the first load.

In the process of determining whether the vehicle triggers the low power protection mode, for example, whether the vehicle triggers the low power protection mode can be determined by detecting whether a voltage of a single cell in the power battery is lower than a threshold, when the voltage of the single cell in the power battery is not lower than the threshold, it is determined that the vehicle does not trigger the low power protection mode of the power battery. When the voltage of the single cell in the power battery is lower than the threshold, it is determined that the vehicle triggers the low power protection mode of the power battery. In an embodiment, whether the vehicle triggers the low power protection mode of the power battery can be determined within a certain period. The certain period can be, for example, 1h.

When the controller detects that the vehicle triggers the low power protection mode, the battery management unit is woken up and the first voltage conversion module is controlled to adjust a duty cycle of a driving wave of switching element through a conversion control module to make the first voltage conversion module enter a normal working mode. After the first voltage conversion module switches to the normal working mode, the power battery can be intelligently charged through the charging device, in the intelligent charging process, the remaining power can be continuously detected to determine whether the remaining power meets a fully charged condition, when the fully charged condition is not met, the power battery is charged continuously until fully charged. When the fully charged condition is met, it is determined that the charging is completed, then the first voltage conversion module is controlled to enter the sleep mode, and whether the vehicle triggers the low power protection mode is continuously determined, when the low power protection mode is triggered, the battery management unit is woken up and the first voltage conversion module is controlled to enter the normal working mode, and the charging device is controlled to turn on and the power battery is charged by the charging device, thus, by continuously controlling and adjusting the first voltage conversion module and the battery management unit, it is ensured that the vehicle has sufficient power. In an embodiment, the charging device can be a generator or a motor, etc.

When the controller detects that the gear state of the vehicle is OFF, at this time, only the first voltage conversion module is used to convert the voltage which is output by the power battery, therefore, it is necessary to perform a mode switching operation on the first voltage conversion module according to whether the vehicle enters the sleep mode. The first voltage conversion module can include a normal working mode and a sleep mode, a conversion control module and a switching element connected to the conversion control module are arranged inside the first voltage conversion module, the first voltage conversion module is controlled to enter the normal working mode or the sleep mode by controlling the conduction or disconnection of the switching element through the conversion control module, when the first voltage module is in the normal working mode, the voltage which is output by the power battery is stepped down; when the first voltage module is in the sleep mode, the first voltage conversion module stops working.

Especially, if the vehicle enters the sleep mode, the first voltage conversion module is controlled to turn on as the sleep mode, to ensure that the first voltage conversion module meets the power requirements of the vehicle in the sleep mode; if mode determination result indicates that the vehicle is not in the sleep mode, the first voltage conversion module is controlled to turn on as the normal working mode, to ensure that the first voltage conversion module meets the power requirements of the vehicle when the vehicle is not in the sleep mode.

When it is detected that the gear state of the vehicle is OFF, in the process of determining whether the vehicle is in the sleep mode, the controller can determine whether the vehicle is in the sleep mode by obtaining a bus message of the vehicle and detecting whether the vehicle bus message meets the sleep mode conditions, when the sleep mode conditions are met, the mode determination result is that the vehicle enters the sleep mode; when the sleep mode conditions are not met, the mode determination result is that the vehicle does not enter the sleep mode.

In the embodiment, the controller can automatically detect whether the vehicle meets a charging condition by controlling and adjusting the first voltage conversion module to switch a corresponding mode and detecting whether the vehicle triggers the low power protection mode of the power battery, so as to automatically charge the vehicle when the charging condition is met, thereby ensuring that the vehicle has sufficient power and guaranteeing the driving safety of the vehicle.

In an embodiment, when the controller detects that the gear information of the vehicle is ON, that is, the vehicle is in the starting state, at this time, in the battery apparatus, not only the first voltage conversion module is used to step down the voltage of the power battery to supply power to the first load, but also the second voltage conversion module is used to step down the voltage of the power battery to supply power to the first load. Specifically, when the controller detects that the vehicle is in the starting state, the second control instruction is generated and sent to the battery management unit, to ensure the battery management unit receives the second control instruction, the power battery is controlled to step down through the second voltage conversion module to supply power to the first load according to the second control instruction, and the first voltage conversion module is controlled to step down the voltage of the power battery to supply power to the first load.

Further, the controller can detect whether a current power of the vehicle is lower than a preset working power, when the current power of the vehicle is lower than the preset working power, a fifth control instruction is generated and sent to the battery management unit, to ensure the battery management unit receives the fifth control instruction and the power battery is controlled to stop stepping down through the second voltage conversion module to supply power to the first load according to the fifth control instruction.

It should be noted that the controller can generate instructions according to whether the working state of the second voltage conversion module is good or whether the power of the starting battery is low, to ensure each module in the low voltage power supply system actively reduces the working power to adapt to a bad state of a current power supply unit, this process can be called triggering the second limit power state of the vehicle. The second limit power state means that the current power of the vehicle is lower than the preset working power.

In an embodiment, in the process of detecting whether the current power of the vehicle is lower than the preset working power, the controller can detect whether the current power of the vehicle is lower than the preset working power by detecting whether the power of the power battery is less than a preset threshold, if the power of the power battery is less than the preset threshold, it is determined that the current power of the vehicle is lower than the preset working power; if the power of the power battery is not less than the preset threshold, it is determined that the current power of the vehicle is not lower than the preset working power. The controller can also detect whether the current power of the vehicle is lower than the preset working power by detecting whether the second voltage conversion module meets the normal working conditions, when the normal working conditions are not met, it is determined that the current power of the vehicle is lower than the preset working power; when the second voltage conversion module meets the normal working conditions, it is determined that the current power of the vehicle is not lower than the preset working power.

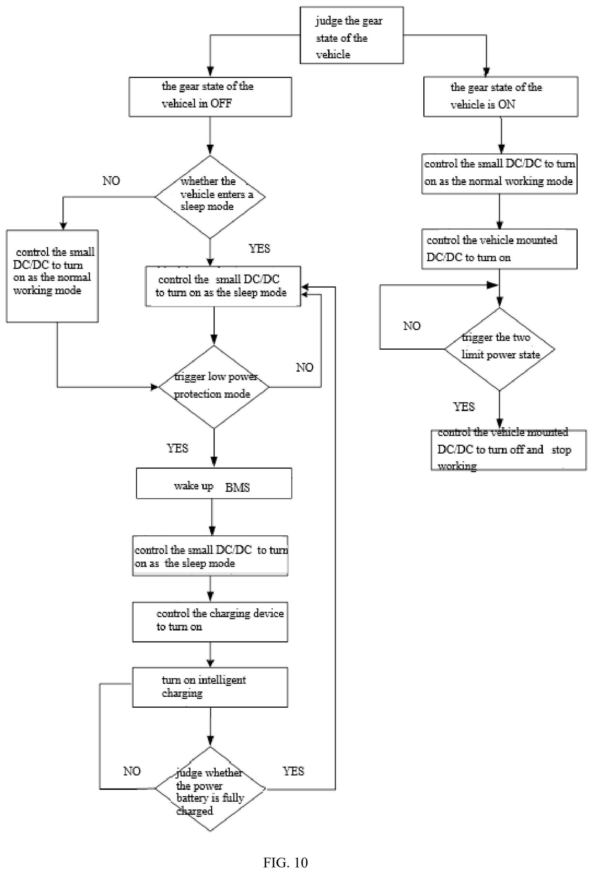

Exemplarily, as shown in FIG. 10, taking the controller as the VCU, the first voltage conversion module as a small DC/DC, and the second voltage conversion module as the vehicle mounted DC as an example, the VCU can detect the gear state of the vehicle, when the VCU detects that the entire vehicle is in an OFF gear, that is, the vehicle is in the power-off state, at this time, only the small DC/DC in the battery apparatus steps down the voltage of the power battery to supply power to the first load. The controller determines whether the vehicle enters the sleep mode, when the vehicle does not enter the sleep mode, the first control instruction is generated and sent to the battery management unit, to ensure the battery management unit controls the small DC/DC to enter the normal working mode, and the main power part starts to work. When the vehicle enters the sleep mode, the third control instruction is generated and sent to the battery management unit, to ensure the battery management unit controls the small DC/DC to stop working according to the third control instruction, and the main power part stops working. Then the controller determines whether the vehicle triggers the low battery protection mode, when the low battery protection mode is triggered, the fourth control instruction is generated and sent to the battery management unit to wake up the battery management unit BMS and the small DC/DC is controlled to enter the normal working mode through the battery management unit, then the charging device is controlled to turn on and the power battery is charged by the charging device, and whether the remaining power meets the fully charged condition is determined, when the fully charged condition is not met, the power battery is charged continuously until fully charged. When the fully charged condition is met, it is determined that the vehicle is in a fully charged state, then the small DC/DC is controlled to enter the sleep mode, and further whether the vehicle triggers the low battery protection state is determined, and corresponding operations are performed according to the determination results, thereby ensuring that the battery is fully charged.

When it is detected that the entire vehicle is in an ON gear, it is determined that the vehicle is in the starting state, at this time, the battery apparatus not only needs to step down the power battery through the small DC/DC to supply power to the first load, but also needs to step down the power battery through the vehicle mounted DC to supply power to the first load. The control system generates the second control instruction and sends the second control instruction to the battery management unit, to ensure the battery management unit receives the second control instruction, the small DC/DC is controlled to turn on as the normal working mode and the vehicle mounted DC is turned on for work, then whether the vehicle triggers the second limit power state is judged, the second limit power state refers to whether the current power of the vehicle is lower than the preset working power, if the second limit power state is triggered, the controller generates the fifth control instruction and sends the fifth control instruction to the battery management unit, to ensure the battery management unit controls the vehicle mounted DC to turn off, the power battery is controlled to stop supplying power to the first load by the vehicle mounted DC step down, and the vehicle is made to stop in a period of time, the period of time can be, for example, 120s. If a second limit power condition is not triggered, the control system continues to determine whether the vehicle triggers the second limit power state, and then corresponding operations are performed according to the determination result.

The power supply control method provided by the embodiments of the present disclosure automatically detects whether the vehicle meets the charging condition by detecting the gear state of the vehicle, when it is detected that the gear state of the vehicle is closed, the first voltage conversion module is controlled to turn on the corresponding mode and whether the battery management unit triggers the low battery protection mode of the vehicle is determined, so as to automatically charge the vehicle when the charging condition is met, thereby making the vehicle with sufficient power and ensuring the driving safety of the vehicle. At the same time, when it is detected that the gear state of the vehicle open, whether the current power of the vehicle is lower than the preset working power is automatically detected, and corresponding operations on the vehicle mounted DC are performed according to the detection result, thereby eliminating potential safety hazards and ensuring the driving safety of the vehicle.

It will be noted that although the operations of the method of the present disclosure are described in a specific order in the drawings, this does not require or imply that these operations must be performed in the specific order, or that all the operations shown must be performed to achieve the desired result. On the contrary, the steps depicted in the flowchart can change the order of execution. Additionally or alternatively, some steps can be omitted, multiple steps can be combined into one step for execution, and/or one step can be decomposed into multiple steps for execution.

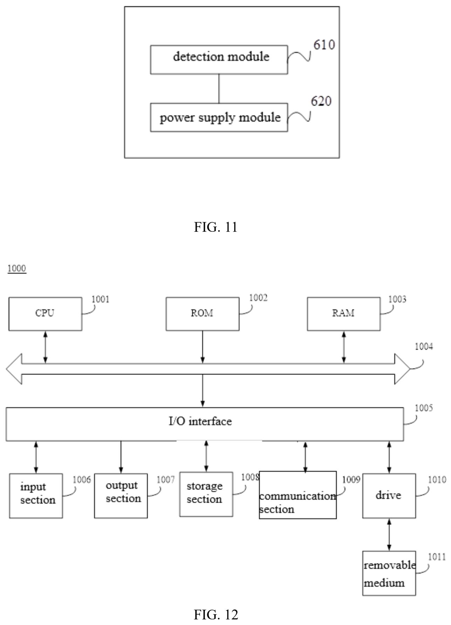

In other aspect, FIG. 11 is a schematic structural diagram of a power supply control device provided by an embodiment of the present disclosure. As shown in FIG. 11, the device 600 includes:
A detection module 610, which is configured to receive control instructions.

A power supply module 620, which is configured to turn on the first voltage conversion module according to the control instructions to step down the voltage of the power battery to supply power to the first load.

In an embodiment, the above power supply module 620 is specifically configured to:
When receiving the first control instruction, control the first voltage conversion module to step down the voltage of the power battery to supply power to the first load according to the first control instruction, the first control instruction indicates that the vehicle is in the power-off state.

When receiving the second control instruction, control the power battery to step down through the second voltage conversion module to supply power to the first load according to the second control instruction, and control the first voltage conversion module to step down the voltage of the power battery to supply power to the first load, the second control instruction indicates that the vehicle is in the starting state.

In an embodiment, the above device is also configured to:
Receive the third control instruction.

Control the first voltage conversion module to stop working according to the third control instruction.

Especially, the third control instruction refers to the vehicle entering the sleep mode.

In an embodiment, the above device is further configured to:
receive the fourth control instruction;
restart the first voltage conversion module according to the fourth control instruction to step down the voltage of the power battery to supply power to the first load.

Especially, the fourth control instruction indicates that the vehicle triggers the low battery protection mode.

In an embodiment, the above device is further configured to:
receive the fifth control instruction;
control the power battery to stop supplying power to the first load by the second voltage conversion module step down according to the fifth control instruction.

Especially, the fifth control instruction indicates that the current power of the vehicle is lower than the preset working power.

It will be understood that the functions of each functional module of the power supply control device provided in the embodiment can be specifically implemented according to the method in the above method embodiment, for the specific implementation process can refer to the relevant description of the above method embodiment, and details are not described herein.

Referring to FIG. 12, FIG. 12 is a schematic structural diagram of a vehicle according to an embodiment of the present disclosure.

As shown in FIG. 12, a computer system 1000 includes a central processing unit (CPU) 1001, which can execute various appropriate actions and processes according to a program stored in a read-only memory (ROM) 1002 or a program loaded from a storage unit 1008 into a random access memory (RAM) 1003. In the RAM 1003, various programs and data required for the operation of the system 1000 are also stored. The CPU 1001, the ROM 1002, and the RAM 1003 are connected to each other through a bus 1004. An input/output (I/O) interface 1006 is also connected to the bus 1004.

The following components are connected to the I/O interface 1005: an input section 1006 including a keyboard, a mouse, etc.; an output section 1007 including a cathode ray tube (CRT), a liquid crystal display (LCD), etc., and a speaker, etc.; a storage section 1008 including a hard disk, etc.; and a communication section 1009 including a network interface card such as a LAN card, a modem, etc. The communication section 1009 performs communication processing by a network such as the Internet. A drive 1010 is also connected to the I/O interface 1006 as needed. A removable medium 1011, such as a magnetic disk, an optical disk, a magneto-optical disk, a semiconductor memory, etc., is installed on the drive 1010 as needed so that a computer program read therefrom can be installed into the storage section 1008 as needed.

In particular, according to an embodiment of the present disclosure, the processes described above with reference to the flowcharts can be implemented as computer software programs. For example, an embodiment of the present disclosure includes a computer program product, including a computer program carried on a machine-readable medium, the computer program containing program code for performing the method illustrated in the flowcharts. In the embodiment, the computer program can be downloaded and installed from a network by the communication section 1003, and/or installed from the removable medium 1011. When the computer program is executed by the central processing unit (CPU) 1001, the above functions defined in the system of the present disclosure are performed.

It will be noted that the computer-readable medium shown in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program, the program can be used by or in connection with an instruction execution system, apparatus, or device. In the present disclosure, the computer-readable signal medium may include a data signal propagated in baseband or as part of a carrier wave, which carries computer-readable program code. The data signal propagated may take many forms, including but not limited to an electromagnetic signal, an optical signal, or any suitable combination of the above. The computer-readable signal medium may also be any computer-readable medium other than the computer-readable storage medium, the computer-readable medium can send, propagate, or transmit the program for use by or in connection with the instruction execution system, apparatus, or device. The program code contained on the computer-readable medium may be transmitted by any suitable medium, including but not limited to wireless, wire, optical fiber cable, RF, etc., or any suitable combination of the above.

The flowcharts and block diagrams in the figures illustrate the architecture, functionality, and operation of possible implementations of system, method, and computer program product according to various embodiments of the present disclosure. In this regard, each box in the flowchart or block diagram may represent a module, a program segment, or a portion of code, which contains one or more executable instructions for implementing the specified logical function. It should also be noted that, in some alternative implementations, the functions noted in the boxes may occur out of the order noted in the figures. For example, two consecutive boxes can actually be executed in parallel, and sometimes they can also be executed in reverse order, depending upon the functionality involved. It should also be noted that each box of the block diagrams and/or flowcharts, and combinations of boxes in the block diagrams and/or flowcharts, can be implemented by special purpose hardware-based systems that perform the specified functions or operations, or by combinations of special purpose hardware and computer instructions.

The units or modules described in the embodiments of the present disclosure may be implemented by software or hardware. The described units or modules may also be provided in a processor. For example, it may be described as: a processor, including a receiving module and a processing module. In some cases, the names of these units or modules do not constitute a limitation on the units or modules themselves, for example, the receiving module may also be described as "used for receiving control instructions".

As another aspect, the present disclosure also provides a computer-readable storage medium, the computer-readable storage medium may be included in the electronic device described in the above embodiments, or may exist independently without being assembled into the electronic device. The above computer-readable storage medium stores one or more programs, When the above programs are used to execute the power supply control method described in the present disclosure by one or more processors:
Control instructions are received.

The first voltage conversion module is turned on according to the control instruction to step down the power battery to supply power to the first load.

In summary, the battery apparatus for the vehicle, the power supply system, and the vehicle provided by the embodiments of the present disclosure, the battery apparatus includes the power battery and the first voltage conversion module, the first end of the first voltage conversion module is connected to the power battery, and the second end of the first voltage conversion module is directly connect to the first load; the first voltage conversion module is configured to: in a power-off state of the vehicle, process the voltage which is output by the power battery, so as to supply power to the first load. Compared with the related art, since the first voltage conversion module is provided in the battery apparatus, the power battery can be additionally used as the starting battery when the vehicle is in the power-off state, so as to process the voltage which is output by the power battery, thereby supplying power to the first load, the power supply method is simple, enabling the power battery to serve as both the energy supply unit for the entire high voltage power section and the starting battery to supply power to the first load, achieving complete multi-scenario use of the power battery and greatly reducing costs. At the same time, electrical isolation between high voltage and low voltage is achieved during the energy conversion process, ensuring the power consumption safety of the entire first load.

The above description is only a preferred embodiment of the present disclosure and an illustration of the applied technical principles. Those skilled in the art will understand that the scope of disclosure involved in the present disclosure is not limited to the technical solutions formed by the specific combination of the above technical features, but also covers other technical solutions formed by any combination of the above technical features or their equivalent features without departing from the disclosed concept. For example, technical solutions can be formed by mutually replacing the above features with (but not limited to) technical features with similar functions disclosed in the present disclosure.

## Claims

1. A battery apparatus for a vehicle, comprising:
a power battery (10); and
a first voltage conversion module (20), a first end of the first voltage conversion module (20) is connected to the power battery (10), and a second end of the first voltage conversion module (20) is directly connected to a first load (30);
the first voltage conversion module (20) is configured to: in a power-off state of the vehicle, process the voltage which is output by the power battery (10), so as to supply power to the first load (30).

2. The battery apparatus according to claim 1, wherein the battery apparatus (11) comprises a first housing, and the power battery (10) and the first voltage conversion module (20) are integrated in the first housing.

3. The battery apparatus according to claim 1 or 2, wherein the first voltage conversion module (20) comprises:
a transformer (210), a primary winding of the transformer (210) is connected to the power battery (10), and a secondary winding of the transformer (210) is connected to the first load (30);
a switching element (220), the switching element (220) is connected to the primary winding; and
a conversion control module (230), the conversion control module (230) is connected to the switching element (220) and is used for controlling the switching element (220) to turn on or off.

4. The battery apparatus according to any one of claims 1 to 3, wherein further comprises:
a battery management unit (40), the battery management unit (40) is connected to the power battery (10), the battery management unit (40) is also connected to the first end of the first voltage conversion module (20) and is used for controlling the first voltage conversion module (20) to switch between a first state and a second state;
in the first state, the first voltage conversion module (20) can step down the voltage of the power battery (10); in the second state, the first voltage conversion module (20) stops working.

5. The battery apparatus according to any one of claims 1 to 4, wherein further comprises:
a control switch group, a first end of the control switch group is connected to the power battery (10), and a second end of the control switch group is connected to a first end of the second voltage conversion module (70),
a second end of the second voltage conversion module (70) is used to connect to the first load (30), the second voltage conversion module (70) is configured to: in a starting state of the vehicle, process the voltage which is output by the power battery (10), so as to supply power to the first load (30).

6. The battery apparatus according to claim 5, wherein the control switch group comprises: a first control switch (510) and a second control switch (520), the first control switch (510) is connected between a positive electrode of the power battery (10) and the first end of the second voltage conversion module (70), and the second control switch (520) is connected between a negative electrode of the power battery (10) and the first end of the second voltage conversion module (70).

7. The battery apparatus according to claim 6, wherein further comprises:
a battery management unit (40), the battery management unit (40) is connected to the control switch group, and the battery management unit (40) is also used to control the control switch group to switch between an ON state and an OFF state.

8. The battery apparatus according to claim 6, wherein further comprises:
a pre-charging circuit unit (430), one end of the pre-charging circuit unit (430) is connected to the positive electrode of the power battery (10), and the other end of the pre-charging circuit unit (430) is connected to the battery management unit (40); and
a protection unit (440), the protection unit (440) is connected between the positive electrode of the power battery (10) and the first end of the first voltage conversion module (20).

9. The battery apparatus according to any one of claims 1 to 8, wherein the power battery (10) comprises a plurality of cells connected in series in sequence, the first end of the first voltage conversion module (20) is connected to a first pole of the cell at the head end and a second pole of the cell at the tail end.

10. A power supply system, comprising:
one or more first loads (30);
the battery apparatus (11) according to any one of claims 1 to 9, the battery apparatus (11) is connected to the first load (30).

11. The power supply system according to claim 10, wherein further comprises:
a low voltage distribution unit (60), a first end of the low voltage distribution unit (60) is connected to the second end of the first voltage conversion module (20), and a second end of the low voltage distribution unit (60) is connected to the first load (30).

12. The power supply system according to claim 10 or 11, wherein further comprises:
a second voltage conversion module (70), the first end of the second voltage conversion module (70) is connected to the power battery (10), and the second end of the second voltage conversion module (70) is connected to the first load (30),
the second voltage conversion module (70) is configured to: in the starting state of the vehicle, process the voltage which is output by the power battery (10) alone or simultaneously with the first voltage conversion module (20), so as to supply power to the first load 30.

13. The power supply system according to claim 12, wherein further comprises:
a second housing, the first voltage conversion module (20) and the second voltage conversion module (70) can be integrated in the second housing.

14. The power supply system according to claim 13, wherein further comprises:
a heat dissipation module, the heat dissipation module is suitable for performing heat dissipation treatment for the first voltage conversion module (20) and the second voltage conversion module (70).

15. The power supply system according to claim 14, wherein the heat dissipation module comprises a heat dissipation pipeline (131) and a refrigeration system (132), a liquid medium is arranged in the heat dissipation pipeline (131), and both the first voltage conversion module (20) and the second voltage conversion module (70) are arranged on the heat dissipation pipeline (131),
the refrigeration system (132) is configured to drive the liquid medium to flow in the heat dissipation pipeline to dissipate the heat generated by the first voltage conversion module (20) and the second voltage conversion module (70).

16. The power supply system according to claim 12, wherein further comprises:
a high voltage power distribution unit (80), a first end of the high voltage power distribution unit (80) is connected to the second voltage conversion module (70), and the second end of the second voltage conversion module (70) is connected to the first load (30).

17. The power supply system according to claim 16, wherein the power supply system further comprises: a controller (90), and the controller (90) is electrically connected to the battery apparatus (11),
when it is detected that the vehicle is in the power-off state, the controller (90) is used to generate a first control instruction and send the first control instruction to the battery apparatus (11), to ensure the battery apparatus (11) steps down the voltage of the power battery (10) through the first voltage conversion module (20) to supply power to the first load (30),
when it is detected that the vehicle is in the starting state, the controller (90) is also used to generate a second control instruction and send the second control instruction to the battery apparatus (11), to ensure the battery apparatus (11) steps down through the first voltage conversion module (20) and/or the second voltage conversion module (70) to supply power to the first load (30).

18. A vehicle, comprising the power supply system according to any one of claims 10 to 17.
